# EUROPEAN PATENT SPECIFICATION

(11) **EP 2 448 777 B1**
(45) Date of publication and mention of the grant of the patent: **20.08.2014**
(21) Application number: 10750162.9
(22) Date of filing: 30.06.2010
(51) Int. Cl.: B60C 23/00

(54) **VEHICLE TYRE INFLATION SYSTEMS**
SYSTEME ZUM AUFBLASEN VON FAHRZEUGREIFEN
SYSTÈMES DE GONFLAGE DE PNEUMATIQUES DE VÉHICULES

(30) Priority: 30.06.2009 GB 0911309
(43) Date of publication of application: 09.05.2012
(73) Proprietor: Agco GmbH & Co. OHG, 87616 Marktoberdorf (DE)
(72) Inventor: SCHMOLZ, Thomas, 87647 Oberthingau (DE); FRANK, Georg, 87663 Lengenwang (DE); KNOBLOCK, Jurgen, 87614 Ruderatshofen (DE)
(74) Representative: Smith, Louise Marie
(86) International application number: PCT/IB2010/001596
(87) International publication number: WO 2011/001261

(56) References cited:
- WO-A1-2007/025320
- US-A- 4 640 331
- US-A1- 2007 144 171
- US-A1- 2008 251 177

## Description

It is well know that to promote good tyre wear, fuel consumption and levels of vehicle grip it is important to maintain the appropriate level of tyre pressure in vehicle tyres. This is particularly difficult with vehicles such as tractors where large volumes of air may be required to change the tyre pressure and significantly different type pressures are required when driving the tractor in field conditions as compared to on the road.

This can result in excessively long time periods being required to change, for example, all four tyres of a medium sized tractor from a field pressure of say 0.6 bar to a road pressure of say 1.6 bar [using a typical high pressure low volume compressor supplied on most tractor to operate such consumers as the tractor brakes] when the tractor is drive out of a field onto the road.

WO 2007/025320 discloses a tyre inflation system according to the preamble of claim 1 comprising pneumatically controlled wheel valves in the wheels of a vehicle. An electrically actuated pilot valve controls the wheel valves and two compressor are provided. One compressor supplies a compressed air system comprising the wheel valves and the other compressor supplies the pilot valves in another compressed air system.
There is therefore a requirement for an improved tyre inflation system for use on a vehicle such as a tractor which reduces the time required to inflate the associated tyres.

Thus according to the present invention there is provided a tyre inflation system for a vehicle having a first and second compressor, the first compressor is adapted to supply pressurised air to one or more consumers on the vehicle and the second compressor is a higher flow rate compressor which can be connected with or without the first compressor to one or more tyres of the vehicle, characterised in that the first and second compressors 11,22 are connected in series with a priority control valve and the first compressor is adapted to supply pressurised air to the one or more consumers and tyres via the priority control valve to ensure that air can only be supplied from the first compressor to the tyres if the supply of pressurised air to one or more consumers via the first compressor is assured and wherein a control valve is located between the compressors to allow air from the second compressor to be connected to the tyres without passing through the priority control valve.

The first compressor supplies pressurised air to the one or more consumers and tyres via a priority flow control valve which ensures that air can only be supplied from the first compressor to the tyre inflation circuit if the supply of pressurised air to one or more priority consumers via the first air supply system is assured.

The two compressors are connected in series to the priority control valve so that all air supplied to the tyre inflation circuit is supplied via the priority flow control valve.
The tyre inflation circuit may include a connector to supply compressed air to one or more tyres of a trailer drawn by the vehicle.

The second higher flow rate compressor may be a radial vane tyre compressor.

The second compressor may be driven by an electric motor or a mechanical drive from an engine of the vehicle or by a hydraulic pump and motor circuit.

The present invention will now be described, by way of example only, with reference to the accompanying drawings in which:-
- Figure 1: shows an end view of a vehicle engine showing two belt drive systems used to drive two compressors from the engine;
- Figure 2: shows diagrammatically a first form of tyre inflation system in which the two compressors are connected in series and both compressors supply air to the vehicle tyres via a priority flow control valve;
- Figure 3: shows diagrammatically a second form of tyre inflation system in which the second higher flow rate compressor can supply air to the tyres without the air passing through the priority flow control valve in accordance with the invention
- Figure 4: shows connections to a first compressor of the tyre inflation system, and
- Figure 5: shows connections to a first compressor of the tyre inflation system in accordance with the invention.

Referring to the drawings, a tractor tyre inflation system 10 has a first compressor 11 which is connected with a priority control valve 12 via air drier 13. Priority control valve 12 supplies pressure to a left hand tractor brake 14 via a line 14a and a reservoir 14b. Similarly a right hand tractor brake 15 is supplied by line 15a and reservoir 15b. If the tractor is provided with a trailer having rear brakes 16, these are also supplied from valve 12 via line 16a and reservoir 16b.

Priority control valve 12 also has a further output line 17 which supplies tyre inflation control valves 18 and 19 which supply tyre inflation pressure to front tyres 20 and rear tyres 21 respectively via rotary air transfer arrangements 20a and 21 a respectively.

In accordance with the present invention a second air compressor 22 is provided which is connected in series with the first compressor 11. The compressors are also interconnected via an air filter 23 and recoil valve 24.

The first compressor 11 is of a low volume high pressure type which typically delivers 400 litres per minute at a pressure of 8.5bar. The second compressor 22 delivers air at a low pressure of say 2.5bar but that is at a much higher flow rate of say 6000 litres per minute. The second compressor is of the radial vane type and is similar in construction to a turbo charger used to boost the power of an internal combustion engine

The priority control valve 12 ensures that no compressed air is supplied to the tyre inflation control valves 18 and 19 unless the brakes 14,15 and 16 are receiving the required air pressure to operate as currently required by the tractor driver.

The first compressor 11 is provided primarily to provide the necessary pressure for the brakes 14,15 and 16 and, due to its low volume delivery rate it is not suitable for deflating tyres 20 and 21.

Typically if it is required to increase the pressure of front tyres 20 and rear tyres 21 from the level of 0.6 bar conventionally used in field operations to the higher 1.6 bar required for road use the time taken to make this tyre pressure change is typically the order of 15 minutes if only the first compressor 11 is used. However, by using the second compressor 22, which is of the radial vane type, to charge the first compressor 11 the overall delivery rate into the front and rear tyres 20,21 can be increased up to about 2000 litres per minute at a pressure of 8.5 bar. This significantly shortens the inflation time when changing from a pressure of 0.6 to 1.6 bar to a time period of 3 to 4 minutes.

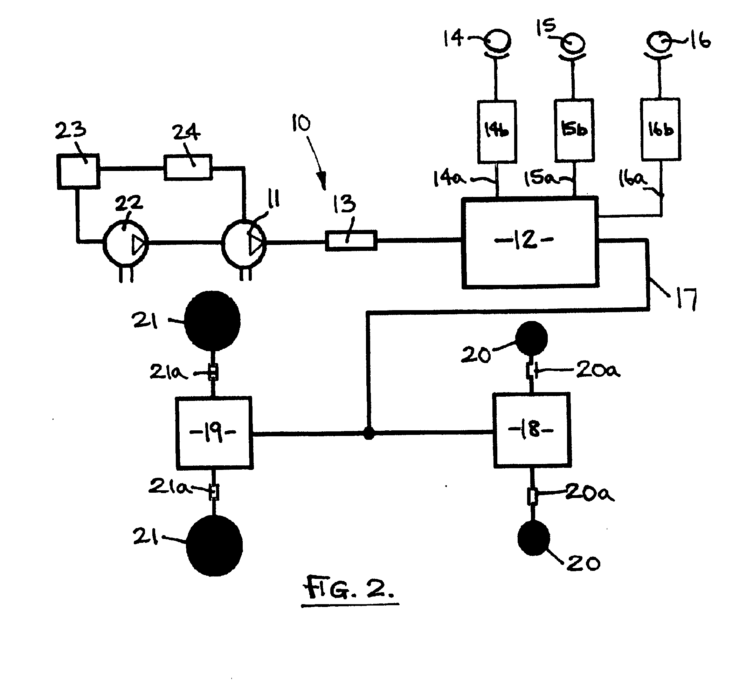

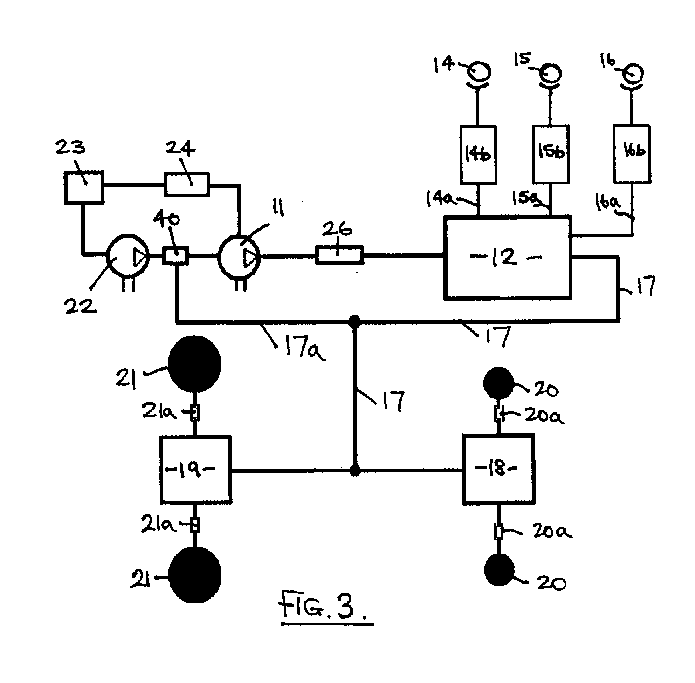

The recoil valve 24 is provided to avoid short circuiting of the air supply but also allows the standard first compressor 11 to be driven on its own for powering the brakes. If the standard first compressor 11 and second compressor 22 is operated (referring to Fig.2) and control valve 40 is open (when referring to Fig. 3), overpressure is applied to recoil valve 24 and thereby flow through it is closed. So air cannot pass recoil valve 24 in the direction towards filter 23 thus avoiding short circuiting. If the standard first compressor 11 is operated and second compressor 22 is not operated, the recoil valve 24 is opened by suction effect, so the air is passing filter 23 and recoil valve 24 before entering standard first compressor 11 as flow resistance through second compressor 22 is very much higher.

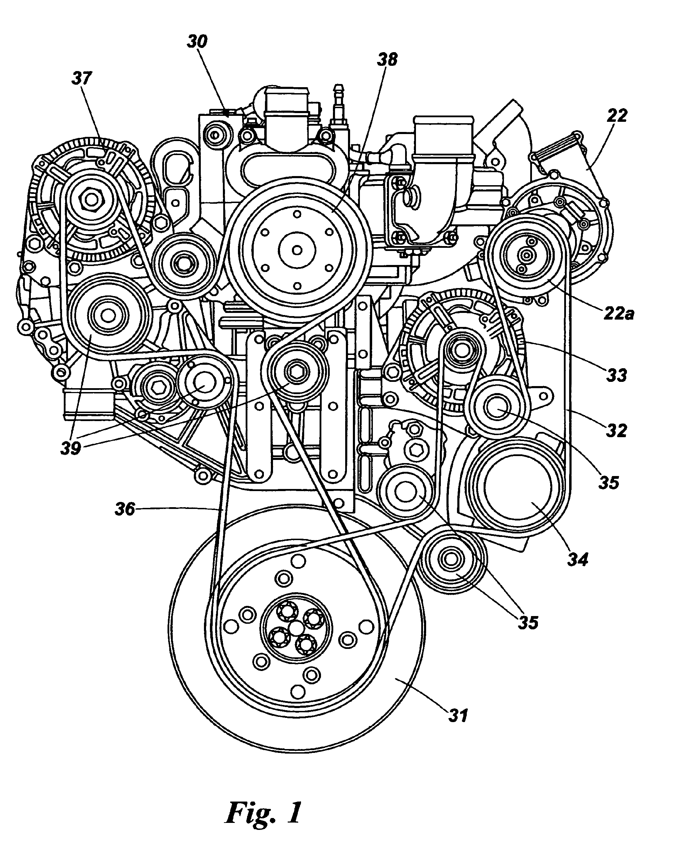

Figure 1 shows an actual typical installation on an engine 30 which has a main drive pulley 31 driven from the engine crankshaft. The second radial compressor 22 has drive pulley 22a which is driven by drive belt 32 from pulley 31. Drive belt 32 also drives an alternator 33 and an air conditioning compressor 34 whilst extending around pulleys 35. A further drive belt 36 drives a further alternator 37 and a cooling fan pulley 38 whilst extending around pulleys 39. The remaining first or primary air compressor 11 is not visible in Figure 1 and is provided with a separate drive from the engine.

Both compressors 11 and 22 can be connected or disconnected from the engine by the use of appropriate drive clutches. In an alternative arrangement the compressors could be driven by electric motors or by a hydraulic pump and motor arrangement from the engine.

Figure 3 shows an arrangement in which the second higher volume flow rate but lower pressure compressor 22 can be directly connected with line 17 via a connection 17a so that the high volume low pressure compressor 22 can supply pressure to the tyres 22 and 21 without passing through the priority control valve 12. A control valve 40 is provided between the compressors 11 and 22 to enable compressor 22 to supply air directly to tyres 20 and 21 when required. Thus in certain applications it possible for the second compressor 22 on its own to be able to supply sufficient pressure and volume to inflate the tyres 20 and 21 in an acceptable time period. However, if the tractor is towing a trailer, which may have a tyre pressure requirement of 1 to 4 bar, the compressor 22 on its own will not be sufficient to inflate the trailer tyres and the first compressor 11 needs to be used in series with the second compressor 22 as described above.

Also, the bi-pass arrangement using control valve 40 may be useful as it allows, for example, the standard or first compressor 11 to be occupied filling the brake reservoirs 14b,15b and 16b as the top priority whilst the second compressor 22 can operate in parallel changing the tyre pressures. For example, the radial second compressor 22 is typically capable of inflating the tyres from 0.6 bar to 1.0 bar whilst the first compressor 11 is filling the reservoirs 14b,15b and 16b and then the two compressor 11 and 22 together provide the remainder of the tyre inflation from 1.0 to 1.6 bar giving a total fill time of approximately 3 minutes.

In either the Figure 2 or Figure 3 arrangement line 17 can be provided with a further inflation valve (not shown) and associated connections for the supply of air to inflate the tyres of a trailer towed by the tractor.

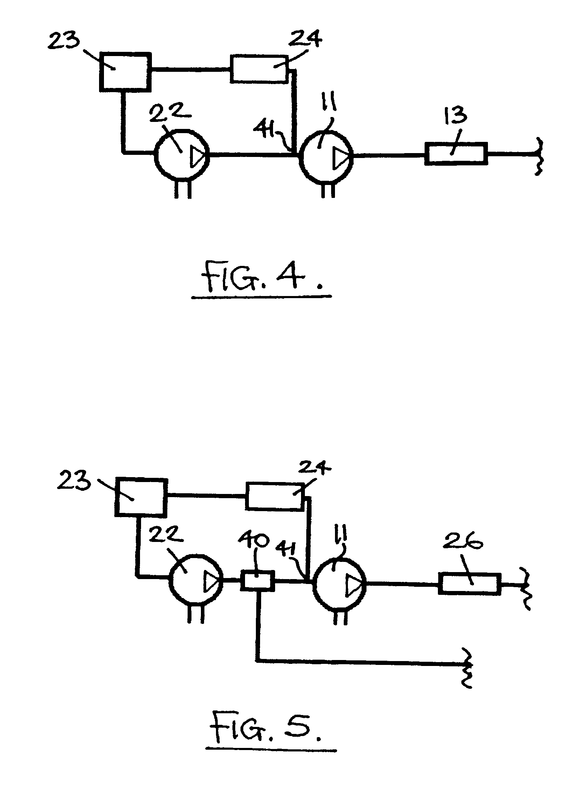

In Figures 2 and 3 the standard first compressor 11 is equipped with two inlets, one connected to recoil valve 24, the other inlet connected to second compressor 22 (in Fig. 2) or to control valve 40 (in Fig. 3). Both inlets are connected inside the compressor 11 before the compressing means. Alternatively the standard first compressor 11 could have only one inlet connected to recoil valve 24 and second compressor 22 (in Fig. 2) or to recoil valve 24 and control valve 40 (in Fig. 3) via a T-fitting 41 as shown in Figures 4 and 5.

## Claims

1. A tyre inflation system (10) for a vehicle having a first and second compressor (11, 22) the first compressor (11) is adapted to supply pressurised air to one or more consumers (14, 15, 16, 20, 21) on the vehicle and the second compressor (22) is a higher flow rate compressor which can be connected with or without the first compressor (11) to one or more tyres (20, 21) of the vehicle, **characterised in that** the first and second compressors (11, 22) are connected in series with a priority control valve (12) and the first compressor (11) is adapted to supply pressurised air to the one or more consumers (14, 15, 16) and tyres (20, 21) via the priority control valve (12) to ensure that air can only be supplied from the first compressor (11) to the tyres (20, 21) if the supply of pressurised air to one or more consumers (14, 15, 16) via the first compressor (11) is assured and wherein a control valve (40) is located between the compressors (11, 22) to allow air from the second compressor (22) to be connected to the tyres (20, 21) without passing through the priority control valve (12).

2. A tyre inflation system (10) according to claim 1 in which all air supplied to the tyres (20, 21) is supplied via the priority control valve (12).

3. A tyre inflation system (10) according to any of the preceding claims comprising a connector to supply compressed air to one or more tyres of a trailer drawn by the vehicle.

4. A tyre inflation system according to any preceding claim in which the second compressor (22) is a radial vane type compressor.

5. A tyre inflation system (10) according to any preceding claim in which the second compressor (22) is driven by an electric motor or a mechanical drive from an engine (30) of the vehicle or by a hydraulic pump and motor circuit.

## Patentansprüche

1. Reifen-Aufblas-System (10) für ein Fahrzeug mit einem ersten und einem zweiten Kompressor (11, 22), wobei der erste Kompressor (11) geeignet zur Bereitstellung von Druckluft zu einem oder mehreren Verbrauchern (14, 15, 16, 20, 21) des Fahrzeugs gestaltet oder angepasst ist und der zweite Kompressor (22) ein Kompressor mit höherer Flussrate ist, der mit oder ohne den ersten Kompressor (11) mit einem oder mehreren Reifen (20, 21) des Fahrzeugs verbunden werden kann, **dadurch gekennzeichnet, dass** der erste und zweite Kompressor (11, 22) in Reihe mit einem Prioritäts-Steuer-Ventil (12) verbunden sind und der erste Kompressor (11) geeignet zur Bereitstellung von Druckluft zu dem einen oder den mehreren Verbrauchern (14, 15, 16) und Reifen (20, 21) über das Prioritäts-Steuer-Ventil (12) angepasst oder gestaltet ist, um zu gewährleisten, dass Druckluft von dem ersten Kompressor (11) zu den Reifen (20, 21) lediglich dann bereitgestellt werden kann, wenn die Bereitstellung der Druckluft zu einem oder mehreren Verbrauchern (14, 15, 16) über den ersten Kompressor (11) gewährleistet ist, und wobei ein Steuerventil (40) zwischen den Kompressoren (11, 22) angeordnet ist, um zu ermöglichen, dass Druckluft ohne Durchtritt durch das Prioritäts-Steuer-Ventil (12) von dem zweiten Kompressor (22) mit den Reifen (20, 21) verbunden wird.

2. Reifen-Aufblas-System (10) nach Anspruch 1, wobei sämtliche Druckluft, die für die Reifen (20, 21) bereitgestellt wird, über das Prioritäts-Steuer-Ventil (12) bereitgestellt wird.

3. Reifen-Aufblas-System (10) nach einem der vorhergehenden Ansprüche mit einem Verbinder zur Bereitstellung von Druckluft zu einem oder mehreren Reifen eines Anhängers, welcher von dem Fahrzeug gezogen wird.

4. Reifen-Aufblas-System (10) nach einem der vorhergehenden Ansprüche, in dem der zweite Kompressor (22) ein Kompressor des Typs Radial-Flügelrad ist.

5. Reifen-Aufblas-System (10) nach einem der vorhergehenden Ansprüche, in dem der zweite Kompressor (22) durch einen elektrischen Motor oder einen mechanischen Antrieb von einem Motor (30) des Fahrzeugs oder durch eine hydraulische Pumpe und einen Motorkreislauf angetrieben ist.

## Revendications

1. Dispositif de gonflage de pneu (10) pour un véhicule comprenant un premier et un second compresseurs (11, 22), le premier compresseur (11) est adapté de manière à délivrer de l'air comprimé à un ou plusieurs consommateurs (14, 15, 16, 20, 21) sur le véhicule et le second compresseur (22) est un compresseur d'un débit supérieur qui peut être raccordé avec ou sans le premier compresseur (11) à un ou plusieurs pneus (20, 21) du véhicule, **caractérisé en ce que** les premier et second compresseurs (11, 22) sont raccordés en série à une vanne de commande de priorité (12) et le premier compresseur (11) est adapté de manière à délivrer de l'air comprimé à un ou plusieurs consommateurs (14, 15, 16) et pneus (20, 21) par l'intermédiaire de la vanne de commande de priorité (12) afin d'assurer que de l'air peut être délivré uniquement à partir du premier compresseur (11) vers les pneus (20, 21) si l'alimentation en air comprimé vers un ou plusieurs consommateurs (14, 15, 16) par l'intermédiaire du premier compresseur (11) est assurée, et dans lequel une vanne de commande (40) est située entre les compresseurs (11, 22) afin de permettre la fourniture de l'air du second compresseur (22) aux pneus (20, 21) sans passer par la vanne de commande de priorité (12).

2. Dispositif de gonflage de pneu (10) selon la revendication 1 dans lequel tout l'air délivré vers les pneus (20, 21) est délivré par l'intermédiaire de la vanne de commande de priorité (12).

3. Dispositif de gonflage de pneu (10) selon l'une quelconque des revendications précédentes, comprenant un raccord destiné à délivrer de l'air comprimé à un ou plusieurs pneus d'une remorque tirée par le véhicule.

4. Dispositif de gonflage de pneu selon l'une quelconque des revendications précédentes, dans lequel le second compresseur (22) est un compresseur du type à aube radiale.

5. Dispositif de gonflage de pneu (10) selon l'une quelconque des revendications précédentes, dans lequel le second compresseur (22) est entraîné par un moteur électrique ou un dispositif d'entraînement mécanique à partir d'un moteur (30) du véhicule ou par un circuit à pompe et moteur hydraulique.
